# EUROPEAN PATENT APPLICATION

(11) **EP 4 336 867 A1**
(43) Date of publication of application: **13.03.2024**
(21) Application number: 21939708.0
(22) Date of filing: 07.05.2021
(51) Int. Cl.: H04W 4/12

(54) **LINK FAILURE PROCESSING METHOD AND APPARATUS, AND TERMINAL DEVICE AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: dompatent von Kreisler Selting Werner - Partnerschaft von Patent- und Rechtsanwälten mbB
(86) International application number: PCT/CN2021/092235
(87) International publication number: WO 2022/233062

(57) **Abstract**

A link failure processing method and apparatus, and a terminal device and a storage medium, which can be applicable to a 5G/NR system. The method comprises: after a link failure occurs, a relay terminal device sending a first notification message to a remote terminal device, wherein the link failure at least comprises any one of the following: a wireless link failure, timeout of a T310 timer, timeout of a T312 timer, an SRB1 integrity checking failure, an SRB2 integrity checking failure, an SRB3 integrity checking failure, and a reconfiguration failure. After a link failure occurs, a relay terminal device gives a notification to a remote terminal device, such that the remote terminal device can perform a corresponding operation on the basis of the notification to process a link failure of the relay terminal device, and a rational processing means can be used according to a quality of service (QoS) requirement of the remote terminal device, thereby avoiding unnecessary relay reselection, facilitating resource saving, and avoiding resource waste.

## Description

### TECHNICAL FIELD

The disclosure relates to a field of communication technologies, in particular to a method for processing a link failure, an apparatus for processing a link failure, a terminal device and a storage medium.

### BACKGROUND

In order to support direct communication between User Equipments (UEs), a sidelink communication mode is introduced. An interface between the UEs is a PC5 port. Based on a correspondence between a sending UE and a receiving UE, three transmission modes are supported on the sidelink, i.e., unicast, multicast and broadcast.

A UE can realize communication with a base station through the relay by means of another UE without directly connecting to the base station. A UE that is not connected to the base station is referred to as remote UE, and a UE that provides a relay function is referred to as relay UE. The remote UE can communicate with the relay UE through the sidelink. When the relay UE communicates with the remote UE, a link failure often occurs on the relay UE side, causing that the remote UE cannot communicate with the base station. However, there is a lack of effective means for dealing with link failure on the relay UE.

### SUMMARY

Embodiments of the disclosure provide a method for processing a link failure, an apparatus for processing a link failure, a terminal device and a storage medium, which can be applied to a 5G/ New Radio (NR) system. After a link failure has occurred on a relay terminal device, the relay terminal device notifies a remote terminal device of this, such that the remote terminal device knows that the link failure has occurred at the relay terminal device corresponding to the remote terminal device and the remote terminal device can take appropriate actions to deal with the link failure of the relay terminal device. For example, the remote terminal device may choose relay reselection based on the notification or wait for a connection reestablishment with the relay terminal device, so that a reasonable processing manner may be adopted based on a quality of service (QoS) requirement of the remote terminal device, to avoid unnecessary relay reselection, which is conducive to saving resources and avoiding waste of resources.

In a first aspect, embodiments of the disclosure provide a method for processing a link failure, performed by a relay terminal device. The method includes:

in response to a link failure occurring on the relay terminal device, sending a first notification message to a remote terminal device, in which the link failure includes at least one of:

a radio link failure; a T310 timer being expired; a T312 timer being expired; an integrity check failure on a Signaling Radio Bearer (SRB) 1; an integrity check failure on a SRB2; an integrity check failure on a SRB3; or a reconfiguration failure.

In the technical solution, after a link failure has occurred on a relay terminal device, the relay terminal device notifies a remote terminal device of this, such that the remote terminal device knows that the link failure has occurred on the relay terminal device corresponding to the remote terminal device and the remote terminal device can take appropriate actions to deal with the link failure of the relay terminal device. For example, the remote terminal device may choose to perform a relay reselection based on the notification or wait for a connection reestablishment with the relay terminal device, so that a reasonable processing manner may be adopted based on a quality of service (QoS) requirement of the remote terminal device, to avoid unnecessary relay reselection, which is conducive to saving resources and avoiding waste of resources.

In an implementation, sending the first notification message to the remote terminal device includes: determining whether to send the first notification message to the remote terminal device based on a reestablished cell.

In a possible implementation, determining whether to send the first notification message to the remote terminal device based on the reestablished cell includes: receiving an area range sent by a network device, in which the area range is a cell list or a tracking area list; in response to performing by the relay terminal device a cell reestablishment within the area range, not sending the first notification message to the remote terminal device; and in response to not performing by the relay terminal device a cell reestablishment within the area range, sending the first notification message to the remote terminal device.

In the technical solution, by determining whether to send the first notification message to the remote terminal device based on the reestablished cell of the relay terminal device, it can avoid sending any unnecessary notification, which is conducive to saving resources and avoiding waste of resources.

In a possible implementation, determining whether to send the first notification message to the remote terminal device based on the reestablished cell includes: in response to the a cell chosen to be reestablished by the relay terminal device is identical to a serving cell before the link failure occurs, not sending the first notification message to the remote terminal device; and in response to a cell chosen to be reestablished by the relay terminal device is different from the serving cell before the link failure occurs, sending the first notification message to the remote terminal device.

In the technical solution, by determining whether to send the first notification message to the remote terminal device based on whether the cell chosen to be reestablished by the relay terminal device is identical to the serving cell before the link failure occurs, it can avoid sending any unnecessary notification, which is conducive to saving resources and avoiding waste of resources.

In an implementation, sending the first notification message to the remote terminal device includes: determining to send the first notification message to the remote terminal device based on a configuration from a network device.

In an implementation, determining to send the first notification message to the remote terminal device based on the configuration from the network device includes: receiving first identification information sent by the network device, in which the first identification information is configured to indicate sending the first notification message to all remote terminal devices; and determining whether to send the first notification message to all the remote terminal devices connected to the relay terminal device based on the first identification information.

In the technical solution, in response to a link failure occurring on the relay terminal device, it is determined whether to send the notification to all the remote terminal devices based on an identifier sent by the network device to the relay terminal device. Therefore, one identifier can be used to indicate whether the relay terminal device needs to send the notification to all the remote terminal devices, thereby improving processing efficiency and being conducive to saving resources and avoiding waste of resources.

In an implementation, determining to send the first notification message to the remote terminal device based on the configuration from the network device includes: receiving a plurality of pieces of second identification information sent by the network device, in which each piece of the second identification information is configured to indicate whether to send the first notification message to a corresponding remote terminal device; and determining whether to send the first notification message to corresponding remote terminal devices based on the plurality of pieces of second identification information sent by the network device.

In the technical solution, in response to a link failure occurring on the relay terminal device, it is determined whether to send the notification to corresponding remote terminal devices based on the multiple identifiers corresponding to the remote terminal devices sent by the network device to the relay terminal device. Therefore, with the multiple identifiers, the relay terminal device sends the notification to specific relay terminal devices, thereby avoiding sending any unnecessary notification and being conducive to saving resources and avoiding waste of resources.

In an implementation, determining to send the first notification message to the remote terminal device based on the configuration from the network device includes: receiving a QoS requirement sent by the network device; in response to data of a remote terminal device satisfying a corresponding QoS requirement, sending the first notification message to the remote terminal device satisfying the corresponding QoS requirement; or in response to data of a remote terminal device satisfying a corresponding QoS requirement, not sending the first notification message to the remote terminal device satisfying the corresponding QoS requirement.

In the technical solution, in response to a link failure occurring on the relay terminal device, the relay terminal device determines whether to send the notification to the remote terminal device that satisfies the corresponding QoS requirement based on the QoS requirement sent by the network device and the data of the remote terminal device. Therefore, the relay terminal device can adopt a reasonable processing mode based on the QoS requirement of the remote terminal device, to avoid sending any unnecessary notification, which can also avoid unnecessary relay reselection performed by the remote terminal device.

In an implementation, the first notification message carries auxiliary information, in which the auxiliary information includes at least one of: whether a process in which a secondary cell group (SCG) restores a master cell group (MCG) having been started; whether a reestablished target cell being a same cell as the serving cell before the link failure occurs; or a failure cause, in which the failure cause includes at least one of: a radio link failure; a T310 timer being expired; a T312 timer being expired; an integrity check failure on a SRB1; an integrity check failure on a SRB2; an integrity check failure on a SRB3; or a reconfiguration failure.

In an implementation, the method further includes: stopping sending a relay discovery message; and/or notifying a higher layer that a link failure has occurred. Therefore, resources can be saved and waste of resources can be avoided.

In a possible implementation, the method further includes: in response to a Radio Resource Control (RRC) connection reestablishment of the relay terminal device succeeding, sending a second notification message to a network device and/or sending a RRC connection reestablishment success notification to the remote terminal device, in which the second notification message includes remote terminal devices that remain connected or remote terminal devices that have been released.

In a possible implementation, the method further includes: in response to a RRC connection reestablishment of the relay terminal device failing, sending a RRC connection reestablishment failure notification to the remote terminal device.

In a second aspect, embodiments of the disclosure provide another method for processing a link failure, performed by a remote terminal device. The method includes: receiving a first notification message sent by a relay terminal device, in which the first notification message is sent by the relay terminal device in response to a link failure occurring on the relay terminal device, and the link failure includes at least one of:

a radio link failure; a T310 timer being expired; a T312 timer being expired; an integrity check failure on a SRB1; an integrity check failure on a SRB2; an integrity check failure on a SRB3; or a reconfiguration failure.

In an implementation, the method further includes: determining whether to continue to maintain a connection with the relay terminal device based on auxiliary information carried in the first notification message, and informing the relay terminal device of a determination result, in which the auxiliary information includes at least one of: whether a process in which a SCG restores a MCG having been started; whether a reestablished target cell being a same cell as a serving cell before the link failure occurs; or a failure cause, in which the failure cause includes at least one of: a radio link failure; a T310 timer being expired; a T312 timer being expired; an integrity check failure on a SRB 1; an integrity check failure on a SRB2; an integrity check failure on a SRB3; or a reconfiguration failure.

In the technical solution, the remote terminal device can know a processing operation of the relay terminal device after the link failure occurs or a cause of the link failure based on the auxiliary information carried in the notification message sent by the relay terminal device, so that the remote terminal device can adopt a reasonable processing mode based on the auxiliary information, to avoid any unnecessary relay reselection.

In an implementation, the method further includes: in response to determining to continue to maintain the connection with the relay terminal device, stopping sending relay data to the relay terminal device.

In the technical solution, the remote terminal device can stop sending the relay data to the relay terminal device when determining to continue to maintain the connection with the relay terminal device, which is conducive to saving resources and avoiding waste of resources.

In a possible implementation, the method further includes: receiving a RRC connection reestablishment success notification of the relay terminal device sent by the relay terminal device; and resuming sending the relay data to the relay terminal device.

In the technical solution, when receiving the RRC connection reestablishment success notification of the relay terminal device sent by the relay terminal device, the remote terminal device can determine that the RRC connection reestablishment of the relay terminal device is successful. At this time, the remote terminal device can resume sending the relay data to the relay terminal device and can realize communication with the network device through the relay terminal device, thereby ensuring the normal communication of the remote terminal device.

In a possible implementation, the method further includes: receiving a RRC connection reestablishment failure notification of the relay terminal device sent by the relay terminal device; disconnecting from the relay terminal device and performing a relay reselection and/or triggering a connection reestablishment and/or performing a cell reselection.

In the technical solution, the remote terminal device knows that the RRC connection reestablishment of the relay terminal device has failed when receiving the RRC connection reestablishment failure notification of the relay terminal device sent by the relay terminal device. At this time, the remote terminal device can disconnect from the relay terminal device and choose to perform the relay reselection (e.g., select another relay for communication), or trigger the connection reestablishment to wait for the connection reestablishment with the relay terminal device, or carry out the cell reselection, so that the remote terminal device can adopt a reasonable processing mode based on the QoS requirement to avoid the unnecessary relay reselection.

In a third aspect, embodiments of the disclosure provide an apparatus for processing a link failure. The apparatus has the ability to implement part or all of the functions of the relay terminal device in the method described in the first aspect. For example, the apparatus for processing a link failure may have functions of some or all of embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the apparatus for processing a link failure includes: a transceiver module and a processing module. The processing module is configured to support the apparatus for processing a link failure to perform corresponding functions of the above method. The transceiver module is configured to support communication between the apparatus for processing a link failure and other devices. The apparatus for processing a link failure may further include a storage module coupled to the transceiver module and the processing module, which is configured to store a necessary computer program and data for the apparatus for processing a link failure.

As an example, the processing module may be a processor. The transceiver module may be a transceiver or a communication interface. The storage module may be a memory.

In a fourth aspect, embodiments of the disclosure provide another apparatus for processing a link failure. The apparatus has the ability to implement part or all of the functions of the remote terminal device in the method described in the second aspect. For example, the apparatus for processing a link failure may have functions of some or all of embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the apparatus for processing a link failure includes: a transceiver module and a processing module. The processing module is configured to support the apparatus for processing a link failure to perform corresponding functions of the above method. The transceiver module is configured to support communication between the apparatus for processing a link failure and other devices. The apparatus for processing a link failure may further include a storage module coupled to the transceiver module and the processing module, which is configured to store a necessary computer program and data for the apparatus for processing a link failure.

As an example, the processing module may be a processor. The transceiver module may be a transceiver or a communication interface. The storage module may be a memory.

In a fifth aspect, embodiments of the disclosure provide a terminal device. The terminal device includes: a processor. When the processor calls a computer program stored in a memory, the method described in the first aspect above is performed.

In a sixth aspect, embodiments of the disclosure provide a terminal device. The terminal device includes: a processor. When the processor calls a computer program stored in a memory, the method described in the second aspect above is performed.

In a seventh aspect, embodiments of the disclosure provide a terminal device. The terminal device includes: a processor and a memory having a computer program stored thereon. When the processor executes the computer program stored in the memory, the terminal device is caused to perform the method described in the first aspect above.

In an eighth aspect, embodiments of the disclosure provide a terminal device. The terminal device includes: a processor and a memory having a computer program stored thereon. When the processor executes the computer program stored in the memory, the terminal device is caused to perform the method described in the second aspect above.

In a ninth aspect, embodiments of the disclosure provide a terminal device. The terminal device includes: a processor and an interface circuit. The interface circuit is configured to receive code instructions and transmit the code instructions to the processor. The processor is configured to run the code instructions to cause the terminal device to perform the method described in the first aspect above.

In a tenth aspect, embodiments of the disclosure provide a terminal device. The terminal device includes: a processor and an interface circuit. The interface circuit is configured to receive code instructions and transmit code instructions to the processor. The processor is configured to run the code instructions to cause the terminal device to perform the method described in the second aspect above.

In an eleventh aspect, embodiments of the disclosure provide a communication system. The system includes: the apparatus for processing a link failure of the third aspect or the apparatus for processing a link failure of the fourth aspect, or the terminal device of the fifth aspect or the terminal device of the sixth aspect, or the terminal device of the seventh aspect or the terminal device of the eighth aspect, or the terminal device of the ninth aspect or the terminal device of the tenth aspect.

In a twelfth aspect, embodiments of the disclosure provide a computer-readable storage medium, having instructions used by the above terminal device stored thereon. When the instructions are executed, the terminal device is caused to perform the method of the first aspect.

In a thirteenth aspect, embodiments of the disclosure provide a readable storage medium, having instructions used by the above network device stored thereon. When the instructions are executed, the network device is caused to perform the method of the second aspect.

In a fourteenth aspect, embodiments of the disclosure provide a computer program product including a computer program. When the computer program is running on a computer, the computer is caused to perform the method of the first aspect.

In a fifteenth aspect, embodiments of the disclosure provide a computer program product including a computer program. When the computer program is running on a computer, the computer is caused to perform the method of the second aspect.

In a sixteenth aspect, embodiments of the disclosure provide a computer program. When the computer program is running on a computer, the computer is caused to perform the method of the first aspect.

In a seventeenth aspect, embodiments of the disclosure provide a computer program. When the computer program is running on a computer, the computer is caused to perform the method of the second aspect.

### BRIEF DESCRIPTION OF THE DRAWINGS

In order to clearly illustrate technical solutions of embodiments of the disclosure or background technologies, a description of drawings used in embodiments or the background technologies is given below.
FIG. 1 is a structural diagram illustrating a communication system according to an embodiment of the disclosure.
FIG. 2 is a flowchart illustrating a method for processing a link failure according to an embodiment of the disclosure.
FIG. 3 is a flowchart illustrating another method for processing a link failure according to an embodiment of the disclosure.
FIG. 4 is a flowchart illustrating yet another method for processing a link failure according to an embodiment of the disclosure.
FIG. 5 is a flowchart illustrating yet another method for processing a link failure according to an embodiment of the disclosure.
FIG. 6 is a flowchart illustrating yet another method for processing a link failure according to an embodiment of the disclosure.
FIG. 7 is a structural diagram illustrating an apparatus for processing a link failure according to an embodiment of the disclosure.
FIG. 8 is a structural diagram illustrating another apparatus for processing a link failure according to an embodiment of the disclosure.
FIG. 9 is a structural diagram illustrating yet another apparatus for processing a link failure according to an embodiment of the disclosure.
FIG. 10 is a structural diagram illustrating yet another apparatus for processing a link failure according to an embodiment of the disclosure.
FIG. 11 is a structural diagram illustrating a terminal device according to an embodiment of the disclosure.

### DETAILED DESCRIPTION

Embodiments of the disclosure are described in detail below, examples of which are shown in the accompanying drawings, in which the same or similar numbers represent the same or similar elements or elements with the same or similar functions. Embodiments described below with reference to the drawings are examples and are intended to explain the disclosure, and should not be construed as limiting the disclosure.

In order to better understand the method for processing a link failure according to embodiments of the disclosure, the communication system used in embodiments of the disclosure is first described below.

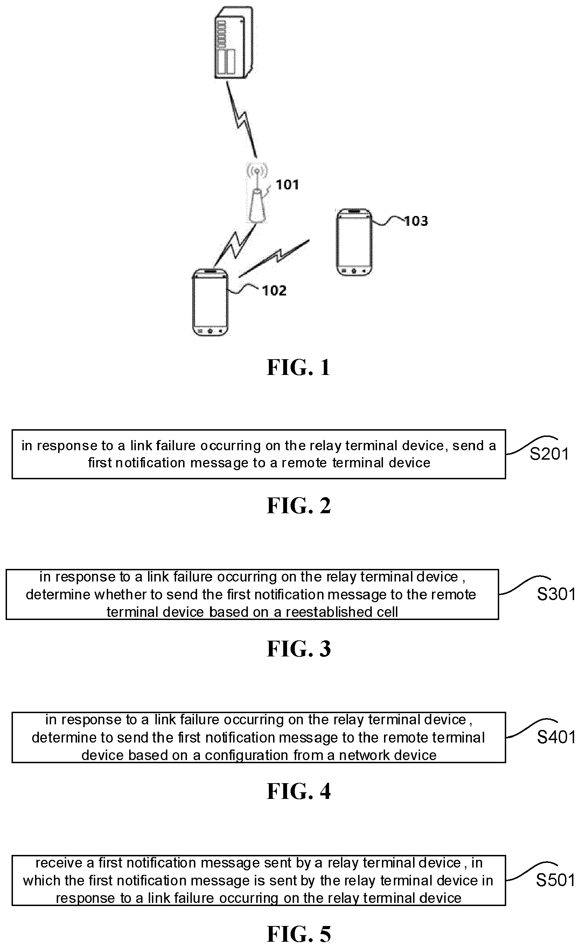

As illustrated in FIG. 1, FIG. 1 is a structural diagram illustrating a communication system according to an embodiment of the disclosure. The communication system may include, but is not limited to, a network device and a plurality of terminal devices. Among the plurality of terminal devices, the terminal device that is not connected to the network device is referred to as remote terminal device, and the terminal device that provides a relay function is referred to as relay terminal device, and the remote terminal device communicates with the relay terminal device through the sidelink. The number and form of devices illustrated in FIG. 1 are only for examples and do not constitute a limitation on embodiments of the disclosure, and two or more network devices and two or more terminal devices may be included in practical applications. The communication system illustrated in FIG. 1 includes, for example, a network device 101, a relay terminal device 102, and a remote terminal device 103.

It is noteworthy that the technical solutions according to embodiments of the disclosure can be used in various communication systems, such as, a long term evolution (LTE) system, a 5th generation (5G) mobile communication system, a 5G NR system, or other future new mobile communication systems.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in embodiments of the disclosure. The network device according to embodiments of the disclosure may be composed of a central unit (CU) and a distributed unit (DU). The CU may also be called a control unit. The use of CU-DU structure allows a protocol layer of the network device, such as a base station, to be split, some functions of the protocol layer are placed in the CU for centralized control, and some or all of the remaining functions of the protocol layer are distributed in the DU, which is intensively controlled by the CU.

The terminal device (e.g., the relay terminal device 102 and the remote terminal device 103) in embodiments of the disclosure is an entity on a user side for receiving or transmitting signals, such as a cellular phone. The terminal device may also be referred to as a terminal, a UE, a mobile station (MS), a mobile terminal (MT), and the like. The terminal device can be a vehicle with communication functions, a smart vehicle, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the disclosure.

It is understandable that the communication system described in embodiments of the disclosure is intended to more clearly illustrate the technical solutions of embodiments of the disclosure, and does not constitute a limitation on the technical solutions according to embodiments of the disclosure. It is understandable by those skilled in the art that as the system architecture evolves and new business scenarios emerge, the technical solutions according to embodiments of the disclosure are also applicable to similar technical problems.

A method for processing a link failure, an apparatus for processing a link failure, a terminal device and a storage medium according to the disclosure will be introduced in detail below with reference to the accompanying drawings.

As illustrated in FIG. 2, FIG. 2 is a flowchart illustrating a method for processing a link failure according to an embodiment of the disclosure. It is noteworthy that the method for processing a link failure according to embodiments of the disclosure may be performed by a relay terminal device. As illustrated in FIG. 2, the method for processing a link failure may include, but is not limited to, the following.

At step S201, in response to a link failure occurring on the relay terminal device, a first notification message is sent to a remote terminal device.

In embodiments of the disclosure, the link failure includes, but is not limited to, any of the followings: a radio link failure; a T310 timer being expired; a T312 timer being expired; an integrity check failure on a SRB1; an integrity check failure on a SRB2; an integrity check failure on a SRB3; or a reconfiguration failure.

It is noteworthy that during the 3GPP RAN2 meeting discussions, many companies proposed the introduction of a fast radio link failure (RLF) recovery mechanism based on the T312 timer in the LTE Rel-12 to further reduce service interruptions and switching failures caused by the RLF in the NR system and the LTE system. The operations of the T312 timer in the LTE system are shown in Table l.The introduction of the T312 timer allows the terminal device to announce the RLF earlier, so that the RRC connection reestablishment process can be initiated earlier, thereby effectively reducing the service interruption time. When the T310 timer is running, it indicates that the downlink quality of the terminal device is not good at this time, and the triggering of the measurement report (for example, the A3 event) is likely to indicate that the terminal device has found a suitable target cell, and the network device will give a handover command to the terminal device based on the measurement result of the terminal device. However, due to a current downlink quality problem of the terminal device, it is likely that the terminal device cannot receive the handover command from the network device, which results in the RLF. If the T312 timer is not introduced, the terminal device needs to wait until the T310 is expired before it triggers the RRC connection reestablishment and restores RRC connection. In order to shorten the service interruption event of the terminal device, after the T312 timer is introduced, the RRC connection reestablishment can be triggered after the T312 is expired, which can help the terminal device to announce the RLF earlier and start the RRC connection reestablishment process earlier.

**Table 1 operations of the T312 timer**

| timer | start | stop | operation after the timer is expired |
|---|---|---|---|
| T312 | when the T310 is running, if a measurement report is triggered for a measurement id configured with T312, then the T312 timer is started | 1. continuous N311 synchronization indications sent by a lower layer are received; | if security is not activated, enters an idle state; and if security is activated, triggers a reestablishment process |
| | | 2. a handover is triggered; | |
| | | 3. connection reestablishment process is triggered; | |
| | | 4. T310 is expired. | |

Therefore, in embodiments of the disclosure, the relay terminal device may determine whether a link failure has occurred by monitoring whether a RLF has occurred, whether the T310 timer is expired, whether the T312 timer is expired, whether there is the integrity check failure on the SRB 1, SRB2 or SRB3, or whether there is a reconfiguration failure. The relay terminal device notifies the remote terminal device when determining that a link failure has occurred. That is, the relay terminal device sends the first notification message to the remote terminal device in the event of any of the above situations that may cause the link failure, and specific examples are given below for easy of understanding.

### Example 1

In response to a link failure occurring on the relay terminal device, a first notification message is sent to a remote terminal device.

For example, when the network device issues a handover command to the relay terminal device based on the measurement result of the relay terminal device, the relay terminal device is likely to be unable to receive the handover command from the network device due to the current poor downlink quality of the relay terminal device, which may cause the RLF. At this time, the relay terminal device may send the first notification message to the remote terminal device to notify the remote terminal device, so that the remote terminal device may know, based on the notification, that an RLF of the corresponding relay terminal device has occurred and may carry out a corresponding operation based on the notification to deal with the RLF of the relay terminal device. For example, the remote terminal device may choose, based on the notification, to perform the relay reselection or to wait for the connection reestablishment with the relay terminal device. Therefore, the remote terminal device may adopt a reasonable processing mode based on the QoS requirement of the remote terminal device, to avoid unnecessary relay reselection, which is conductive to saving resources and avoiding waste of resources.

### Example 2

When the T310 timer of the relay terminal device is expired, a first notification message is sent to a remote terminal device.

For example, when the relay terminal device is performing a radio link detection, if the number of out of sync indicators received consecutively is equal to N310, the timer T310 is triggered to be started. When the timer T310 timer is expired, it is considered that there is the RLF, and at this time, the relay terminal device sends the first notification message to the remote terminal device.

### Example 3

When the T312 timer of the relay terminal device is expired, a first notification message is sent to a remote terminal device.

For example, if a measurement id configured with the T312 timer sends a measurement report, the T312 timer is started when a start condition of the T312 timer is satisfied. If the conditional handover is not triggered before the T312 timer is expired, it is determined that the RLF occurs on the relay terminal device after the T312 timer is expired, and at this time, the relay terminal device sends the first notification message to the remote terminal device.

### Example 4

When there is the integrity check failure on the SRB 1 of the relay terminal device, a first notification message is sent to a remote terminal device.

### Example 5

When there is the integrity check failure on the SRB2 of the relay terminal device, a first notification message is sent to a remote terminal device.

### Example 6

When there is the integrity check failure on the SRB3 of the relay terminal device, a first notification message is sent to a remote terminal device.

That is, when there is the integrity check failure on the SRB 1, SRB2 or SRB3 of the relay terminal device, it is necessary to trigger the RRC reestablishment initialization, that is, it indicates that a link failure occurs on the relay terminal device. At this time, the relay terminal device sends the first notification message to the remote terminal device.

### Example 7

When there is a reconfiguration failure of the relay terminal device, a first notification message is sent to a remote terminal device.

For example, in response to the RRC reconfiguration failure of the relay terminal device, the relay terminal device notifies the remote terminal device of this, so that the remote terminal device can know through this notification that the link failure has occurred on the corresponding relay terminal device.

In an implementation, the above first notification message may carry auxiliary information. In embodiments of the disclosure, the auxiliary information may include, but is not limited to, at least one of the followings: whether a process in which a SCG restores a MCG having been started; whether a reestablished target cell being a same cell as the serving cell before the link failure occurs; or a failure cause, in which the failure cause at least includes, but is not limited to, any one of the followings: a RLF; a T310 timer being expired; a T312 timer being expired; an integrity check failure on a SRB1; an integrity check failure on a SRB2; an integrity check failure on a SRB3; or a reconfiguration failure.

By implementing embodiments of the disclosure, the remote terminal device may know, based on the notification sent by the relay terminal device, that the link failure has occurred on the corresponding relay terminal device and the remote terminal device may carry out the corresponding operation based on the notification to deal with the link failure of the relay terminal device. For example, the remote terminal device may choose to perform relay reselection or wait for the connection reestablishment with the relay terminal device based on the notification, so that a reasonable processing mode can be adopted based on the QoS requirement of the remote terminal device to avoid any unnecessary relay reselection, which is conducive to saving resources and avoiding waste of resources.

It is noteworthy that the relay terminal device can determine whether to notify the remote terminal device based on the reestablished cell. For example, as illustrated in FIG. 3, FIG. 3 is a flowchart illustrating a method for processing a link failure according to an embodiment of the disclosure. It is noteworthy that the method for processing a link failure according to embodiments of the disclosure may be performed by a relay terminal device. As illustrated in FIG. 3, the method for processing a link failure may include, but is not limited to, the following.

At step S301, in response to a link failure occurring on the relay terminal device, it is determined whether to send the first notification message to the remote terminal device based on a reestablished cell.

In embodiments of the disclosure, the link failure includes, but is not limited to, at least one of the followings: a RLF; a T310 timer being expired; a T312 timer being expired; an integrity check failure on a SRB1; an integrity check failure on a SRB2; an integrity check failure on a SRB3; or a reconfiguration failure. Several examples are given below to describe when to send the first notification message to the remote terminal device.

### Example 1

In response to a RLF occurring on the relay terminal device, it is determined whether to send the first notification message to the remote terminal device based on the reestablished cell.

### Example 2

When the T310 timer of the relay terminal device is expired, it is determined whether to send the first notification message to the remote terminal device based on the reestablished cell.

### Example 3

When the T312 timer of the relay terminal device is expired, it is determined whether to send the first notification message to the remote terminal device based on the reestablished cell.

### Example 4

When there is the integrity check failure on the SRB1 of the relay terminal device, it is determined whether to send the first notification message to the remote terminal device based on the reestablished cell.

### Example 5

When there is the integrity check failure on the SRB2 of the relay terminal device, it is determined whether to send the first notification message to the remote terminal device based on the reestablished cell.

### Example 6

When there is the integrity check failure on the SRB3 of the relay terminal device, it is determined whether to send the first notification message to the remote terminal device based on the reestablished cell.

### Example 7

When there is the reconfiguration failure of the relay terminal device, it is determined whether to send the first notification message to the remote terminal device based on the reestablished cell.

It is noteworthy that in embodiments of the disclosure, after the link failure has occurred on the relay terminal device, the relay terminal device initiates the reestablishment, in which the reestablishment can be completed in the original cell or in a neighbor cell. The relay terminal device according to embodiments of the disclosure determines whether to send the first notification message to the remote terminal device based on the selected reestablished cell. Two different examples will be given below to describe the implementation in which the relay terminal device determines whether to send the first notification message to the remote terminal device based on the reestablished cell.

In a possible implementation, the relay terminal device determines whether to send the first notification message to the remote terminal device based on the reestablished cell in the following ways: receiving an area range sent by a network device, in which the area range is a cell list or a tracking area (TA) list; in response to performing by the relay terminal device a reestablishment within the area range, not sending the first notification message to the remote terminal device; and in response to not performing by the relay terminal device a cell reestablishment within the area range, sending the first notification message to the remote terminal device.

For example, the network device (e.g., base station) sends an area range to the relay terminal device, and the relay terminal device determines whether to reestablish the cell within that area range. The relay terminal device does not notify the remote terminal device if the relay terminal device performs the cell reestablishment within that area range. If the relay terminal device does not perform the cell reestablishment within the area range, the relay terminal device notifies the remote terminal device. Therefore, the relay terminal device determines whether to send the first notification message to the remote terminal device based on the reestablished cell of the relay terminal device, to avoid sending unnecessary notifications, which is conducive to saving resources and avoiding waste of resources.

In a possible implementation, the relay terminal device determines whether to send the first notification message to the remote terminal device based on the reestablished cell in the following ways: in response to a cell chosen to be reestablished by the relay terminal device is identical to a serving cell before the link failure occurs, not sending the first notification message to the remote terminal device; and in response to a cell chosen to be reestablished by the relay terminal device is different from the serving cell before the link failure occurs, sending the first notification message to the remote terminal device.

That is, when the cell selected to be reestablished by the relay terminal device is the same as the serving cell before the link failure occurs, the relay terminal device does not notify the remote terminal device. When the cell selected to be reestablished by the relay terminal device is different from the serving cell before the link failure occurs, the relay terminal device notifies the remote terminal device. Therefore, the relay terminal device determines whether to send the first notification message to the remote terminal device based on whether the reestablished cell selected by the relay terminal device is the same as the serving cell before the link failure occurs, to avoid sending any unnecessary notification, which is conducive to saving resources and avoiding waste of resources.

It is noteworthy that in response to a link failure occurring on the relay terminal device, the relay terminal device can determine whether to notify the remote terminal device based on a configuration from a network device. For example, as illustrated in FIG. 4, FIG. 4 is a flowchart illustrating a method for processing a link failure according to an embodiment of the disclosure. It is noteworthy that the method for processing a link failure according to embodiments of the disclosure may be performed by a relay terminal device. As illustrated in FIG. 4, the method for processing a link failure may include, but is not limited to, the following.

At step S401, in response to a link failure occurring on the relay terminal device, it is determined to send the first notification message to the remote terminal device based on a configuration from a network device.

In embodiments of the disclosure, the link failure includes, but is not limited to, at least one of: a RLF; a T310 timer being expired; a T312 timer being expired; an integrity check failure on a SRB1; an integrity check failure on a SRB2; an integrity check failure on a SRB3; or a reconfiguration failure.

Several examples will be given below to describe when to send the first notification message to the remote terminal device.

### Example 1

In response to a RLF occurring on the relay terminal device, it is determined to send the first notification message to the remote terminal device based on a configuration from a network device.

### Example 2

When the T310 timer of the relay terminal device is expired, it is determined to send the first notification message to the remote terminal device based on a configuration from a network device.

### Example 3

When the T312 timer of the relay terminal device is expired, it is determined to send the first notification message to the remote terminal device based on a configuration from a network device.

### Example 4

When there is the integrity check failure on the SRB1 of the relay terminal device, it is determined to send the first notification message to the remote terminal device based on a configuration from a network device.

### Example 5

When there is the integrity check failure on the SRB2 of the relay terminal device, it is determined to send the first notification message to the remote terminal device based on a configuration from a network device.

### Example 6

When there is the integrity check failure on the SRB3 of the relay terminal device, it is determined to send the first notification message to the remote terminal device based on a configuration from a network device.

### Example 7

When the reconfiguration of the relay terminal device is failed, it is determined to send the first notification message to the remote terminal device based on a configuration from a network device.

It is noteworthy that in embodiments of the disclosure, the network device (e.g., base station) configures an identifier used to indicate whether the relay terminal device sends the notification to all remote terminal devices or identifier(s) used to indicate to which remote terminal device(s) the relay terminal device need to send the notification. The following examples illustrate different implementations of the step of determining to send the first notification message to the remote terminal device based on the configuration from the network device.

As an example of a possible implementation, determining, by the relay terminal device, to send the first notification message to the remote terminal device based on the configuration from the network device includes: receiving first identification information sent by the network device, in which the first identification information is configured to indicate to send the first notification message to all remote terminal devices; and determining whether to send the first notification message to all the remote terminal devices connected to the relay terminal device based on the first identification information.

For example, the network device (e.g., base station) sends an identifier (i.e., the first identification information described above) to the relay terminal device. The relay terminal device determines, based on the first identification information, whether to send the first notification information to all remote terminal devices connected to the relay terminal device. That is, the relay terminal device will determine, based on the identifier sent by the network device, whether to send the notification to all remote terminal devices. Therefore, in the technical solution, when the link failure of the relay terminal device has occurred, it is determined, based on the identifier sent by the network device to the relay terminal device, whether to send the notification to all remote terminal devices. Therefore, a single identifier can be used to indicate whether the relay terminal device needs to send the notification to all remote terminal devices, to improve the processing efficiency, which is conductive to saving resources and avoiding waste of resources.

As an example of another possible implementation, determining to send the first notification message to the remote terminal device based on the configuration from the network device includes: receiving a plurality of pieces of second identification information sent by the network device, in which each piece of the second identification information is configured to indicate whether to send the first notification message to a corresponding remote terminal device; and determining whether to send the first notification message to the corresponding remote terminal devices based on the plurality of pieces of second identification information sent by the network device.

For example, the network device sends a plurality of identifiers (such as the second identification information described above) corresponding to the remote terminal devices to the relay terminal device, and each of the identifiers is used to indicate whether to send the notification to the corresponding remote terminal device, so that the relay terminal device may determine whether to send the notification to the corresponding remote terminal devices based on the plurality of identifiers sent by the network device. Therefore, with the multiple identifiers, the relay terminal device can send the notification to specific remote terminal devices, to avoid sending any unnecessary notification, which is conducive to saving resources and wasting resources.

As an example of another possible implementation, determining by the relay terminal device to send the first notification message to the remote terminal device based on the configuration from the network device includes: receiving a QoS requirement sent by the network device; in response to data of a remote terminal device satisfying the corresponding QoS requirement, sending the first notification message to the remote terminal device satisfying the corresponding QoS requirement; or in response to the data of a remote terminal device satisfying the corresponding QoS requirement, not sending the first notification message to the remote terminal device satisfying the corresponding QoS requirement. This QoS can be controlled by a quasi co-location indicator (QCL) and a packet delay budget.

For example, the network device sends the QoS requirement to the relay terminal device. When the data of a remote terminal device satisfies the corresponding QoS requirement, the relay terminal device sends the first notification message to the corresponding remote UE. Or, when the data of a remote terminal device satisfies the corresponding QoS requirement, the relay terminal device does not send the first notification message to the corresponding remote terminal device. Therefore, when the link failure of the relay terminal device occurs, the relay terminal device determines, based on the QoS requirement sent by the network device and the data of the remote terminal device, whether to send the notification to the remote terminal device that satisfies the corresponding QoS requirement. Based on the QoS requirement of the remote terminal device, a reasonable processing mode is adopted, to avoid sending any unnecessary notification by the relay terminal device, thereby avoiding to perform any unnecessary relay reselection by the remote terminal device.

In an implementation, the method for processing a link failure according to embodiments of the disclosure further includes: stopping sending a relay discovery message after the link failure occurs. For example, the relay terminal device notifies the higher layer that a link failure has occurred after the link failure occurs. The higher layer stop sending the relay discovery message after receiving the notification about the link failure, which is conductive to saving resources and avoiding waste of resources.

In a possible implementation, the method for processing a link failure according to embodiments of the disclosure further includes: in response to a RRC connection reestablishment with the relay terminal device succeeding, sending a second notification message to a network device, and/or, sending a RRC connection reestablishment success notification to the remote terminal device, in which the second notification message includes remote terminal device(s) that remain(s) connected or remote terminal device(s) that has/have been released.

That is, the relay terminal device notifies the network device (e.g., base station) of state(s) of the remote terminal device(s) after the RRC connection reestablishment succeeds. The notification includes remote terminal device(s) that is/are still connected or remote terminal device(s) that has/have been released, such that the network device can know which remote terminal device(s) still remain connected or the remote terminal device(s) that has/have been released. For example, the relay terminal device sends a reestablishment success notification to the remote terminal device after the RRC connection reestablishment succeeds, so that the remote terminal device can know that the RRC connection reestablishment with the relay terminal device succeeds and can resume sending the relay data to the relay terminal device, to ensure normal communication of the remote terminal device.

As another example, the relay terminal device sends the second notification message to the network device after the RRC connection reestablishment succeeds, and sends the RRC connection reestablishment success notification to the remote terminal device. Therefore, the network device can know which remote terminal device(s) still remain(s) connected or which remote terminal device(s) has/have been released, and the remote terminal device(s) can know that the RRC connection reestablishment with the relay terminal device succeeds and can resume sending the relay data to the relay terminal device, to ensure the normal communication of the remote terminal device.

In a possible implementation, the method for processing a link failure according to embodiments of the disclosure further includes: in response to a RRC connection reestablishment with the relay terminal device failing, sending a RRC connection reestablishment failure notification to the remote terminal device. Therefore, the remote terminal device can know that the RRC connection reestablishment with the relay terminal device fails, and the remote terminal device disconnects from the relay terminal device and performs the relay reselection and/or triggers the connection reestablishment and/or performs the cell reselection, so that the remote terminal device can adopt a reasonable processing mode based on the QoS requirement to avoid unnecessary relay reselection.

Embodiments of the disclosure also provide another method for processing a link failure, and the implementation of the method for processing a link failure will be described below from the remote terminal device side. As illustrated in FIG. 5, FIG. 5 is a flowchart illustrating another method for processing a link failure according to an embodiment of the disclosure. It is noteworthy that the method for processing a link failure according to embodiments of the disclosure can be performed by the remote terminal device. As illustrated in in FIG. 5, the method for processing a link failure may include, but is not limited to, the following.

At step S501, a first notification message sent by a relay terminal device is received, in which, in embodiments of the disclosure, the first notification message is sent by the relay terminal device in response to a link failure occurring on the relay terminal device.

That is, the relay terminal device sends the first notification message to the remote terminal device in response to a link failure occurring on the relay terminal device. The remote terminal device receives the first notification message from the relay terminal device via the sidelink communication. The link failure includes, but is not limited to, at least one of: a RLF; a T310 timer being expired; a T312 timer being expired; an integrity check failure on a SRB1; an integrity check failure on a SRB2; an integrity check failure on a SRB3; or a reconfiguration failure.

That is, the relay terminal device sends the first notification message to the remote terminal device in the event of any of the above situations that may cause the link failure, and specific examples are given below for easy of understanding.

### Example 1

In response to a RLF occurring on the relay terminal device, the first notification message is sent to the remote terminal device.

For example, when the network device issues a handover command to the relay terminal device based on the measurement result of the relay terminal device, the relay terminal device is likely unable to receive the handover command from the network device due to poor downlink quality of the relay terminal device, which may cause the RLF. At this time, the relay terminal device may send the first notification message to the remote terminal device to notify the remote terminal device, so that the remote terminal device may know, based on the notification, that an RLF of the corresponding relay terminal device has occurred and may carry out a corresponding operation based on the notification to deal with the RLF of the relay terminal device. For example, the remote terminal device may choose, based on the notification, to perform the relay reselection or to wait for the connection reestablishment with the relay terminal device, and the remote terminal device may adopt a reasonable processing mode based on the QoS requirement of the remote terminal device, to avoid any unnecessary relay reselection, which is conductive to saving resources and avoiding waste of resources.

### Example 2

When the T310 timer of the relay terminal device is expired, the first notification message is sent to the remote terminal device.

For example, when the relay terminal device performs the radio link detection, if the number of out of sync indicators received consecutively is equal to N310, the timer T310 is triggered to be started. When the timer T310 timer is expired, it is considered that there is the RLF, and at this time, the relay terminal device sends the first notification message to the remote terminal device.

### Example 3

When the T312 timer of the relay terminal device is expired, the first notification message is sent to the remote terminal device.

For example, if a measurement id configured with the T312 timer sends a measurement report, the T312 timer is started when the start condition of the T312 timer is satisfied. If the conditional handover is not triggered before the T312 timer is expired, it is determined that the RLF has occurred on the relay terminal device after the T312 timer is expired. At this time, the relay terminal device sends the first notification message to the remote terminal device.

### Example 4

When there is the integrity check failure on the SRB1, the first notification message is sent to the remote terminal device.

### Example 5

When there is the integrity check failure on the SRB2, the first notification message is sent to the remote terminal device.

### Example 6

When there is the integrity check failure on the SRB3, the first notification message is sent to the remote terminal device.

That is, when there is the integrity check failure on the SRB 1, SRB2 or SRB3 of the relay terminal device, it is necessary to trigger the RRC reestablishment initialization, that is, it indicates there is a link failure of the relay terminal device. At this time, the relay terminal device sends the first notification message to the remote terminal device.

### Example 7

When the reconfiguration of the relay terminal device is failed, the first notification message is sent to the remote terminal device.

For example, in response to the RRC reconfiguration failure of the relay terminal device, the relay terminal device notifies the remote terminal device so that the remote terminal device can know via this notification that the link failure of the corresponding relay terminal device has occurred.

It is noteworthy that the relay terminal device determines whether to notify the remote terminal device based on the reestablished cell. As an example of a possible implementation, the relay terminal device determines whether to send the first notification message to the remote terminal device based on the reestablished cell in the following ways: receiving an area range sent by a network device, in which the area range is a cell list or a TA list; in response to the relay terminal device performing a cell reestablishment within the area range, not sending the first notification message to the remote terminal device; and in response to the relay terminal device not performing a cell reestablishment within the area range, sending the first notification message to the remote terminal device.

As an example of another possible implementation, determining by the relay terminal device whether to send the first notification message to the remote terminal device based on the reestablished cell, includes: in response to a cell chosen to be reestablished by the relay terminal device is identical to a serving cell before the link failure occurs, not sending the first notification message to the remote terminal device; and in response to a cell chosen to be reestablished by the relay terminal device is different from the serving cell before the link failure occurs, sending the first notification message to the remote terminal device.

It is noteworthy that when a link failure of the relay terminal device has occurred, the relay terminal device can determine whether to notify the remote terminal device based on a configuration from the network device. As an example of another possible implementation, determining by the relay terminal device whether to send the first notification message to the remote terminal device based on the configuration from the network device includes: receiving first identification information sent by the network device, in which the first identification information is configured to indicate to send the first notification message to all remote terminal devices; and determining whether to send the first notification message to all the remote terminal devices connected to the relay terminal device based on the first identification information.

As an example of another possible implementation, determining by the relay terminal device to send the first notification message to the remote terminal device based on the configuration from the network device includes: receiving a plurality of pieces of second identification information sent by the network device, in which each piece of the second identification information is configured to indicate whether to send the first notification message to a corresponding remote terminal device; and determining whether to send the first notification message to corresponding remote terminal devices based on the plurality of pieces of second identification information sent by the network device.

As an example of another possible implementation, determining by the relay terminal device to send the first notification message to the remote terminal device based on the configuration from the network device includes: receiving a QoS requirement sent by the network device; in response to data of a remote terminal device satisfying the corresponding QoS requirement, sending the first notification message to the remote terminal device satisfying the corresponding QoS requirement; or in response to the data of a remote terminal device satisfying the corresponding QoS requirement, not sending the first notification message to the remote terminal device satisfying the corresponding QoS requirement. This QoS can be controlled by a QCL and a packet delay budget.

By implementing embodiments of the disclosure, when the remote terminal device receives the first notification message sent by the relay terminal device after the link failure occurs, the remote terminal device may know in time that the link failure of the corresponding relay terminal device has occurred, so that the remote terminal device can adopt a reasonable processing mode in time, to ensure normal communication of the remote terminal device, which is conducive to avoiding any unnecessary relay reselection.

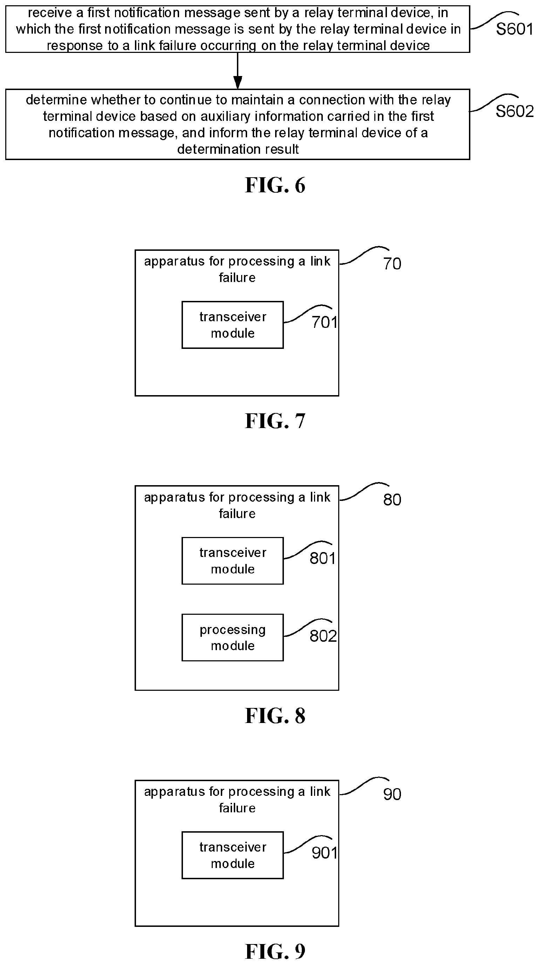

It is noteworthy that the first notification message sent by the relay terminal device to the remote terminal device may carry auxiliary information. In this way, the remote terminal device, upon receiving the first notification message, can determine whether to continue to maintain the connection with the relay terminal device. For example, as illustrated in FIG. 6, FIG. 6 is a flowchart illustrating a method for processing a link failure according to an embodiment of the disclosure. It is noteworthy that the method of processing a link failure according to embodiments of the disclosure may be performed by a remote terminal device. As illustrated in FIG. 6, the method for processing a link failure may include, but is not limited to, the following.

At step S601, a first notification message sent by a relay terminal device is received, in which the first notification message is sent by the relay terminal device in response to a link failure occurring on the relay terminal device, and the link failure includes at least one of:
a RLF; a T310 timer being expired; a T312 timer being expired; an integrity check failure on a SRB1; an integrity check failure on a SRB2; an integrity check failure on a SRB3; or a reconfiguration failure.

In embodiments of the disclosure, step S601 may be realized in any of embodiments of the disclosure respectively, which is not limited in embodiments of the disclosure and will not be repeated.

At step S602, it is determined whether to continue to maintain a connection with the relay terminal device based on auxiliary information carried in the first notification message, and the relay terminal device is informed of a determination result.

In some embodiments of the disclosure, the auxiliary information includes at least one of: whether a process in which a SCG restores a MCG having been started; whether a reestablished target cell being a same cell as a serving cell before the link failure occurs; or a failure cause, in which the failure cause includes at least one of: a radio link failure; a T310 timer being expired; a T312 timer being expired; an integrity check failure on a SRB 1; an integrity check failure on a SRB2; an integrity check failure on a SRB3; or a reconfiguration failure.

In embodiments of the disclosure, the remote terminal device, upon receiving the first notification message sent by the relay terminal device after the link failure occurs, determines whether to continue to maintain the connection with the relay terminal device based on the auxiliary information carried in the first notification message. If the remote terminal device determines to continue to maintain the connection with the relay terminal device, the remote terminal device notifies the relay terminal device when determining to maintain the connection, so that the relay terminal device can know that the remote terminal device still maintains the connection with the relay terminal device. If the remote terminal device determines to disconnect from the relay terminal device based on the auxiliary information carried in the first notification message, the remote terminal device disconnects from the relay terminal device, and notifies the relay terminal device when disconnecting from the relay terminal device, so that the relay terminal device can know that the remote terminal device has disconnected from the relay terminal device.

By implementing embodiments of the disclosure, the remote terminal device may know, based on the auxiliary information carried in the notification message sent by the relay terminal device, the processing operation performed after the link failure of the relay terminal device occurs or the link failure cause, so that the remote terminal device can adopt a reasonable processing mode based on the auxiliary information to avoid any unnecessary relay reselection.

In an implementation, the method for processing a link failure according to embodiments of the disclosure further includes: in response to determining by the remote terminal device, to maintain the connection with the relay terminal device, stopping sending relay data to the relay terminal device. In the technical solution, the remote terminal device may stop sending the relay data to the relay terminal device when determining continue to maintain the connection with the relay terminal device, which is conductive to saving resources and avoiding waste of resources.

In a possible implementation, the method for processing a link failure according to embodiments of the disclosure further includes: receiving by the remote terminal device a RRC connection reestablishment success notification of the relay terminal device sent by the relay terminal device; and resuming sending the relay data to the relay terminal device. In the technical solution, the remote terminal device may determine that the RRC connection reestablishment with the relay terminal device succeeds when receiving the RRC connection reestablishment success notification of the relay terminal device sent by the relay terminal device. Meanwhile, the remote terminal device may resume sending the relay data to the relay terminal device, and communicate with the network device through the relay terminal device, to ensure normal communication of the remote terminal device.

In a possible implementation, the method for processing a link failure according to embodiments of the disclosure further includes: receiving a RRC connection reestablishment failure notification of the relay terminal device sent by the relay terminal device; disconnecting from the relay terminal device and performing a relay reselection and/or triggering a connection reestablishment and/or performing a cell reselection. In the technical solution, the remote terminal device, upon receiving the RRC connection reestablishment failure notification of the relay terminal device sent by the relay terminal device, knows that the RRC connection reestablishment of the relay terminal device fails. At this time, the remote terminal device may disconnect from the relay remote device and perform the relay reselection, such as select another relay for communication, or trigger a connection reestablishment to wait for the connection reestablishment with the relay terminal device, or carry out the cell reselection, so that the remote terminal device can adopt a reasonable processing mode based on the QoS requirement, to avoid any unnecessary relay reselection.

In above embodiments of the disclosure, the methods according to embodiments of the disclosure are described from the perspective of the relay terminal device and the remote terminal device respectively. In order to realize each of the above-described functions in the methods according to embodiments of the disclosure, the relay terminal device and the remote terminal device may include a hardware structure and a software module, such that each of the above functions is realized by means of the hardware structure, the software module, or a combination of the hardware structure and the software module. A certain function of the above functions may be performed by means of a hardware structure, a software module, or a combination of the hardware structure and the software module.

As illustrated in FIG. 7, FIG. 7 is a structural diagram illustrating an apparatus 70 for processing a link failure according to an embodiment of the disclosure. It is noteworthy that the apparatus 70 for processing a link failure may be a terminal device (such as the relay terminal device in the preceding method embodiments), a device in the terminal device, or a device capable of being used in combination with the terminal device.

The apparatus 70 for processing a link failure illustrated in FIG. 7 may include a transceiver module 701. The transceiver module 701 may include a sending module and/or a receiving module. The sending module is configured to realize a sending function, and the receiving module is configured to realize a receiving function. The transceiver module 701 may realize the sending function and/or the receiving function.

In embodiments of the disclosure, the transceiver module 701 is configured to, in response to a link failure occurring on the relay terminal device, send a first notification message to a remote terminal device, in which the link failure includes at least one of: a RLF; a T310 timer being expired; a T312 timer being expired; an integrity check failure on a SRB1; an integrity check failure on a SRB2; an integrity check failure on a SRB3; or a reconfiguration failure.

In an implementation, sending by the transceiver module 701 the first notification message to the remote terminal device includes: determining whether to send the first notification message to the remote terminal device based on a reestablished cell.

In a possible implementation, determining by the transceiver module 701 whether to send the first notification message to the remote terminal device based on the reestablished cell includes: receiving an area range sent by a network device, in which the area range is a cell list or a TA list; in response to performing by the relay terminal device a cell reestablishment within the area range, not sending the first notification message to the remote terminal device; and in response to not performing a cell reestablishment by the relay terminal device within the area range, sending the first notification message to the remote terminal device.

In a possible implementation, determining by the transceiver module 701 whether to send the first notification message to the remote terminal device based on the reestablished cell includes: in response to a cell chosen to be reestablished by the relay terminal device being identical to a serving cell before the link failure occurs, not sending the first notification message to the remote terminal device; and in response to a cell chosen to be reestablished by the relay terminal device being different from the serving cell before the link failure occurs, sending the first notification message to the remote terminal device.

In an implementation, sending by the transceiver module 701 the first notification message to the remote terminal device includes: determining to send the first notification message to the remote terminal device based on a configuration from a network device.

In a possible implementation, determining by the transceiver module 701 to send the first notification message to the remote terminal device based on the configuration from the network device includes: receiving first identification information sent by the network device, in which the first identification information is configured to indicate to send the first notification message to all remote terminal devices; and determining whether to send the first notification message to all the remote terminal devices connected to the relay terminal device based on the first identification information.

In a possible implementation, determining by the transceiver module 701 to send the first notification message to the remote terminal device based on the configuration from the network device includes: receiving a plurality of pieces of second identification information sent by the network device, in which each piece of the second identification information is configured to indicate whether to send the first notification message to a corresponding remote terminal device; and determining whether to send the first notification message to corresponding remote terminal devices based on the plurality of pieces of second identification information sent by the network device.

In a possible implementation, determining by the transceiver module 701 to send the first notification message to the remote terminal device based on the configuration from the network device includes: receiving a QoS requirement sent by the network device; in response to data of a remote terminal device satisfying the corresponding QoS requirement, sending the first notification message to the remote terminal device satisfying the corresponding QoS requirement; or in response to the data of a remote terminal device satisfying the corresponding QoS requirement, not sending the first notification message to the remote terminal device satisfying the corresponding QoS requirement.

In an implementation, the first notification message carries auxiliary information, in which the auxiliary information includes at least one of: whether a process in which a SCG restores a MCG having been started; whether a reestablished target cell being a same cell as the serving cell before the link failure occurs; or a failure cause, in which the failure cause includes at least one of: a RLF; a T310 timer being expired; a T312 timer being expired; an integrity check failure on a SRB 1; an integrity check failure on a SRB2; an integrity check failure on a SRB3; or a reconfiguration failure.

In a possible implementation, as illustrated in FIG. 8, the apparatus 80 for processing a link failure may further include a processing module 802. The processing module 802 is configured to: in response to a link failure occurring on the relay terminal device, stop sending a relay discovery message; and/or notify a higher layer that a link failure has occurred. The 801 in FIG. 8 and the 701 in FIG. 7 have the same function and structure.

In a possible implementation, the transceiver module is further configured to: in response to a RRC connection reestablishment with the relay terminal device succeeding, send a second notification message to a network device, and/or, sending a RRC connection reestablishment success notification to the remote terminal device, in which the second notification message includes remote terminal device(s) that remain(s) connected or remote terminal device(s) that has/have been released.

In a possible implementation, the transceiver module is further configured to: in response to a RRC connection reestablishment with the relay terminal device failing, send a RRC connection reestablishment failure notification to the remote terminal device.

With respect to the apparatuses in above embodiments, the specific manner in which each module performs an operation has been described in detail in embodiments relating to the methods, and will not be described in detail herein.

FIG. 9 is a structural diagram illustrating a apparatus 90 for processing a link failure according to an embodiment of the disclosure. It is noteworthy that the apparatus 90 for processing a link failure may be a terminal device (e.g., the remote terminal device in the preceding method embodiments), a device in the terminal device, or a device capable of being used in combination with the terminal device.

The apparatus 90 for processing a link failure illustrated in FIG. 9 may include a transceiver module 901. The transceiver module 901 may include a sending module and/or a receiving module. The sending module is configured to realize a sending function, and the receiving module is configured to realize a receiving function. The transceiver module 901 may realize the sending function and/or the receiving function.

In embodiments of the disclosure, the transceiver module 901 is configured to: receive a first notification message sent by a relay terminal device, in which the first notification message is sent by the relay terminal device in response to a link failure occurring on the relay terminal device, in which the link failure includes at least one of: a RLF; a T310 timer being expired; a T312 timer being expired; an integrity check failure on a SRB 1; an integrity check failure on a SRB2; an integrity check failure on a SRB3; or a reconfiguration failure.

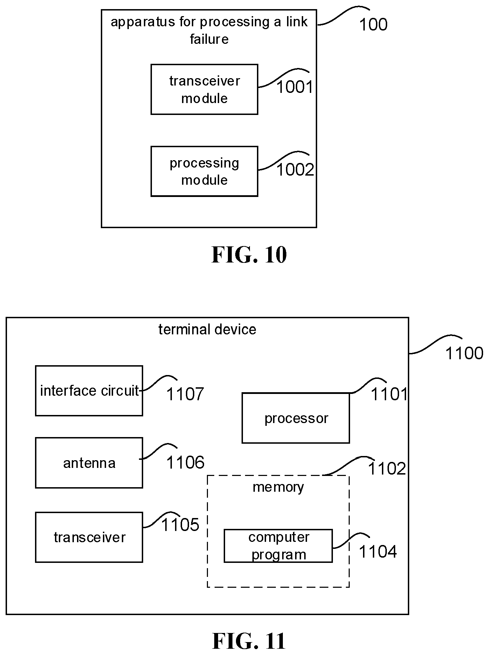

In an implementation, as illustrated in FIG. 10, an apparatus 100 for processing a link failure further includes a processing module 1002. The processing module 1002 is configured to: determine whether to continue to maintain a connection with the relay terminal device based on auxiliary information carried in the first notification message. A transceiver module 1001 is configured to: inform the relay terminal device of a determination result, in which the auxiliary information includes at least one of: whether a process in which a SCG restores a MCG having been started; whether a reestablished target cell being a same cell as a serving cell before the link failure occurs; or a failure cause, in which the failure cause includes at least one of: a RLF; a T310 timer being expired; a T312 timer being expired; an integrity check failure on a SRB1; an integrity check failure on a SRB2; an integrity check failure on a SRB3; or a reconfiguration failure. The 1001 in FIG. 10 and the 901 in FIG. 9 have the same function and structure.

In an implementation, the processing module 1002 is configured to: in response to determining to maintain the connection with the relay terminal device, stop sending relay data to the relay terminal device.

In a possible implementation, the transceiver module 1001 is configured to: receive a RRC connection reestablishment success notification of the relay terminal device sent by the relay terminal device; and resume sending the relay data to the relay terminal device.

In a possible implementation, the transceiver module 1001 is configured to: receive a RRC connection reestablishment failure notification of the relay terminal device sent by the relay terminal device. The processing module 1002 is configured to: disconnect from the relay terminal device and perform a relay reselection and/or trigger a connection re-establishment and/or perform a cell reselection.

With respect to the apparatuses in above embodiments, the specific manner in which each module performs an operation has been described in detail in embodiments relating to the methods, and will not be described in detail herein.

FIG. 11 is a structural diagram illustrating a terminal device 1100 according to an embodiment of the disclosure. The terminal device 1100 may be a terminal device (e.g., the relay terminal device in the preceding method embodiments), the remote terminal device in the preceding method embodiments, or a chip, a chip system or a processor that supports the terminal device to realize the above-described methods. The terminal device may be used to realize the methods described in the above method embodiments with reference to the descriptions of the above-described method embodiments.

The terminal device 1100 may include one or more processors 1101. The processor 1101 may be a general purpose processor or a dedicated processor, such as, a baseband processor and a central processor. The baseband processor is used for processing communication protocols and communication data. The central processor is used for controlling the communication device (e.g., a base station, a baseband chip, a terminal device, a terminal device chip, a DU, or a CU), executing computer programs, and processing data of the computer programs.

In some examples, the terminal device 1100 may include one or more memories 1102 on which computer programs 1104 may be stored. The processor 1101 executes the computer programs 1104 to cause the terminal device 1100 to perform the methods described in the above method embodiments. Or, the memory 1102 may also store data. The terminal device 1100 and the memory 1102 may be provided separately or may be integrated together.

In some examples, the terminal device 1100 may also include a transceiver 1105 and an antenna 1106. The transceiver 1105 may be referred to as a transceiver unit, a transceiver machine, or a transceiver circuit, for realizing a transceiver function. The transceiver 1105 may include a receiver and a transmitter. The receiver may be referred to as a receiving machine or a receiving circuit, for realizing the receiving function. The transmitter may be referred to as a transmitter machine or a transmitting circuit, for realizing the transmitting function.

In some examples, the terminal device 1100 may also include one or more interface circuits 1107. The interface circuits 1107 are used to receive code instructions and transmit them to the processor 1101. The processor 1101 runs the code instructions to cause the terminal device 1100 to perform the method described in the method embodiments.

The terminal device 1100 is the relay terminal device in the preceding method embodiments. The transceiver 1105 is used to perform step S201 of FIG. 2, step S301 of FIG. 3, and step S401 of FIG. 4. The processor 1101 is used to perform the steps of stopping sending the relay discovery message after the link failure occurs, and/or, notifying a higher layer that a link failure has occurred.

The terminal device 1100 is the remote terminal device in the above method embodiments. The transceiver 1105 is used to perform step S501 of FIG. 5, step S601 of FIG. 6, the steps of receiving the RRC connection reestablishment success notification of the relay terminal device sent by the relay terminal device and resuming sending the relay data to the relay terminal device, and the step of receiving the RRC connection reestablishment failure notification of the relay terminal device sent by the relay terminal device. The processor 1101 is used to perform step S602 in FIG. 6, the step of stopping sending the relay data to the relay terminal device in response to determining to maintain the connection with the relay terminal device, and the step of disconnecting from the relay terminal device and performing a relay reselection and/or triggering a connection reestablishment and/or performing a cell reselection.

In an implementation, the processor 1101 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1101 may store a computer program 1103. When the computer program 1103 runs on the processor 1101, the terminal device 1100 is caused to perform the methods described in the method embodiments above. The computer program 1103 may be solidified in the processor 1101, and in such case the processor 1101 may be implemented by hardware.

In an implementation, the terminal device 1100 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The terminal device in the description of the above embodiments may be a network device or a terminal device (e.g., the relay terminal device or the remote terminal device in the preceding method embodiments), but the scope of the terminal device described in the disclosure is not limited thereto, and the structure of the terminal device may not be limited by FIG. 11. The terminal device may be a stand-alone device or may be part of a larger device. For example the described terminal device may be:
(1) a stand-alone IC, a chip, a chip system or a subsystem;
(2) a collection of ICs including one or more ICs. In some examples, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

It is understood by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of embodiments of the disclosure.

Embodiments of the disclosure also provide a system for processing a link failure. The system includes apparatuses for processing a link failure in FIG. 7 and FIG. 8 acting as the relay terminal device in the preceding method embodiments and apparatuses for processing a link failure in FIG. 9 and FIG. 10 acting as the remote terminal device in the preceding method embodiments. Or, the system includes a terminal device in FIG. 11 acting as the relay terminal device in the preceding method embodiments and a terminal device acting as the remote terminal device in the preceding method embodiments.

The disclosure also provides a readable storage medium having instructions stored thereon. When the instructions are executed by a computer, the function of any of the method embodiments described above is performed.

The disclosure also provides a computer program product. When the computer program product is executed by a computer, the function of any of the method embodiments described above is performed.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "multiple" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for processing a link failure, performed by a relay terminal device, comprising:
in response to a link failure occurring on the relay terminal device, sending a first notification message to a remote terminal device, wherein the link failure comprises at least one of:
a radio link failure; a T310 timer being expired; a T312 timer being expired; an integrity check failure on a Signaling Radio Bearer (SRB) 1; an integrity check failure on a SRB2; an integrity check failure on a SRB3; or a reconfiguration failure.

2. The method of claim 1, wherein sending the first notification message to the remote terminal device comprises:
determining whether to send the first notification message to the remote terminal device based on a reestablished cell.

3. The method of claim 2, wherein determining whether to send the first notification message to the remote terminal device based on the reestablished cell comprises:
receiving an area range sent by a network device, wherein the area range is a cell list or a tracking area list;
in response to performing by the relay terminal device a cell reestablishment within the area range, not sending the first notification message to the remote terminal device; and
in response to not performing by the relay terminal device a cell reestablishment within the area range, sending the first notification message to the remote terminal device.

4. The method of claim 2, wherein determining whether to send the first notification message to the remote terminal device based on the reestablished cell comprises:
in response to a cell chosen to be reestablished by the relay terminal device being identical to a serving cell before the link failure occurs, not sending the first notification message to the remote terminal device; and
in response to a cell chosen to be reestablished by the relay terminal device being different from the serving cell before the link failure occurs, sending the first notification message to the remote terminal device.

5. The method of claim 1, wherein sending the first notification message to the remote terminal device comprises:
determining to send the first notification message to the remote terminal device based on a configuration from a network device.

6. The method of claim 5, wherein determining to send the first notification message to the remote terminal device based on the configuration from the network device comprises:
receiving first identification information sent by the network device, wherein the first identification information is configured to indicate to send the first notification message to all remote terminal devices; and
determining whether to send the first notification message to all the remote terminal devices connected to the relay terminal device based on the first identification information.

7. The method of claim 5, wherein determining to send the first notification message to the remote terminal device based on the configuration from the network device comprises:
receiving a plurality of pieces of second identification information sent by the network device, wherein each piece of the second identification information is configured to indicate whether to send the first notification message to a corresponding remote terminal device; and
determining whether to send the first notification message to corresponding remote terminal devices based on the plurality of pieces of second identification information sent by the network device.

8. The method of claim 5, wherein determining to send the first notification message to the remote terminal device based on the configuration from the network device comprises:
receiving a quality of service requirement sent by the network device;
in response to data of a remote terminal device satisfying a corresponding quality of service requirement, sending the first notification message to the remote terminal device satisfying the corresponding quality of service requirement; or
in response to the data of a remote terminal device satisfying a corresponding quality of service requirement, not sending the first notification message to the remote terminal device satisfying the corresponding quality of service requirement.

9. The method of any one of claims 1 to 8, wherein the first notification message carries auxiliary information, and the auxiliary information comprises at least one of:
whether a process in which a secondary cell group (SCG) restores a master cell group (MCG) having been started;
whether a reestablished target cell being a same cell as the serving cell before the link failure occurs; or
a failure cause, in which the failure cause comprises at least one of: the radio link failure; the T310 timer being expired; the T312 timer being expired; the integrity check failure on the SRB1; the integrity check failure on the SRB2; the integrity check failure on the SRB3; or the reconfiguration failure.

10. The method of any one of claims 1 to 9, further comprising:
stopping sending a relay discovery message; and/or
notifying a higher layer that the link failure has occurred.

11. The method of claim 1, further comprising:
in response to a Radio Resource Control (RRC) connection reestablishment with the relay terminal device succeeding, sending a second notification message to a network device and/or sending a RRC connection reestablishment success notification to the remote terminal device, wherein the second notification message comprises remote terminal devices that remain connected or remote terminal devices that have been released.

12. The method of claim 1, further comprising:
in response to a RRC connection reestablishment with the relay terminal device failing, sending a RRC connection reestablishment failure notification to the remote terminal device.

13. A method for processing a link failure, performed by a remote terminal device, comprising:
receiving a first notification message sent by a relay terminal device, wherein the first notification message is sent by the relay terminal device in response to a link failure occurring on the relay terminal device, in which the link failure comprises at least one of:
a radio link failure; a T310 timer being expired; a T312 timer being expired; an integrity check failure on a Signaling Radio Bearer (SRB)1; an integrity check failure on a SRB2; an integrity check failure on a SRB3; or a reconfiguration failure.

14. The method of claim 13, further comprising:
determining whether to continue to maintain a connection with the relay terminal device based on auxiliary information carried in the first notification message, and informing the relay terminal device of a determination result, wherein the auxiliary information comprises at least one of:
whether a process in which a SCG restores a MCG having been started;
whether a reestablished target cell being a same cell as a serving cell before the link failure occurs; or
a failure cause, in which the failure cause comprises at least one of: the radio link failure; the T310 timer being expired; the T312 timer being expired; the integrity check failure on the SRB1; the integrity check failure on the SRB2; the integrity check failure on the SRB3; or the reconfiguration failure.

15. The method of claim 14, further comprising:
in response to determining to maintain the connection with the relay terminal device, stopping sending relay data to the relay terminal device.

16. The method of claim 15, further comprising:
receiving a RRC connection reestablishment success notification of the relay terminal device sent by the relay terminal device; and
resuming sending the relay data to the relay terminal device.

17. The method of claim 13, further comprising:
receiving a RRC connection reestablishment failure notification of the relay terminal device sent by the relay terminal device;
disconnecting from the relay terminal device and performing a relay reselection and/or triggering a connection re-establishment and/or performing a cell reselection.

18. An apparatus for performing a link failure, applied to a relay terminal device, comprising:
a transceiver module, configured to, in response to a link failure occurring on the relay terminal device, send a first notification message to a remote terminal device, wherein the link failure comprises at least one of:
a radio link failure; a T310 timer being expired; a T312 timer being expired; an integrity check failure on a SRB1; an integrity check failure on a SRB2; an integrity check failure on a SRB3; or a reconfiguration failure.

19. An apparatus for processing a link failure, applied to a remote terminal device, comprising:
a transceiver module, configured to receive a first notification message sent by a relay terminal device, wherein the first notification message is sent by the relay terminal device in response to a link failure occurring on the relay terminal device, in which the link failure comprises at least one of:
a radio link failure; a T310 timer being expired; a T312 timer being expired; an integrity check failure on a SRB1; an integrity check failure on a SRB2; an integrity check failure on a SRB3; or a reconfiguration failure.

20. A terminal device, comprising a processor and a memory having a computer program stored thereon, wherein when the computer program is executed by the processor, the terminal device is caused to perform the method of any one of claims 1 to 12.

21. A terminal device, comprising a processor and a memory having a computer program stored thereon, wherein when the computer program is executed by the processor, the terminal device is caused to perform the method of any one of claims 13 to 17.

22. A computer-readable storage medium for storing instructions, wherein when the instructions are executed, the method of any one of claims 1 to 12 is performed.

23. A computer-readable storage medium for storing instructions, wherein when the instructions are executed, the method of any one of claims 13 to 17 is performed.
